(19) Europäisches Patentamt
European Patent Office
Office européen des brevets

(11) EP 0 693 509 B1

(12) **EUROPÄISCHE PATENTSCHRIFT**

(45) Veröffentlichungstag und Bekanntmachung des Hinweises auf die Patenterteilung:
**30.12.1998 Patentblatt 1998/53**

(51) Int Cl.⁶: **C08F 255/00**, C08F 8/12, C08F 8/32, C10L 1/14

(21) Anmeldenummer: **95110985.9**

(22) Anmeldetag: **13.07.1995**

(54) **Umsetzungsprodukte von Polyolefinen mit Vinylestern und ihre Verwendung als Kraft- und Schmierstoffadditive**

Reaction products of polyolefins and vinyl esters and use thereof as lubricating oil and fuel additives

Produits de réaction de polyoléfines et d'esters vinyliques et leur application comme additifs de combustibles ou de lubrifiants

(84) Benannte Vertragsstaaten:
**BE CH DE ES FR GB IT LI NL SE**

(30) Priorität: **22.07.1994 DE 4426003**

(43) Veröffentlichungstag der Anmeldung:
**24.01.1996 Patentblatt 1996/04**

(73) Patentinhaber: **BASF AKTIENGESELLSCHAFT**
**67056 Ludwigshafen (DE)**

(72) Erfinder:
- **Rath, Hans Peter, Dr.**
  **F-67269 Grünstadt (DE)**
- **Mach, Helmut, Dr.**
  **D-69115 Heidelberg (DE)**
- **Schwahn, Harald, Dr.**
  **D-69168 Wiesloch (DE)**
- **Müller, Hans-Joachim, Dr.**
  **D-67269 Grünstadt (DE)**
- **Reif, Wolfgang, Dr.**
  **D-67227 Frankenthal (DE)**
- **Rühl, Thomas, Dr.**
  **D-67227 Frankenthal (DE)**

(56) Entgegenhaltungen:
**EP-A- 0 244 616**
**EP-A- 0 384 367**
**EP-A- 0 400 868**
**EP-A- 0 476 485**
**EP-A- 0 529 102**
**EP-A- 0 596 567**
**WO-A-91/11469**
**DE-B- 1 084 026**
**GB-A- 2 189 251**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 693 509 B1

Printed by Jouve, 75001 PARIS (FR)

## Beschreibung

Die vorliegende Erfindung betrifft Additionsprodukte von Polyolefinen mit überwiegend endständiger Doppelbindung mit Vinylestern sowie deren Hydrolyse- und Aminierungsprodukte. Weiterhin betrifft die vorliegende Erfindung Kraft- oder Schmierstoffzusammensetzungen, welche diese Additionsprodukte als Additive in wirksamen Mengen enthalten.

Vergaser und Einlaßsystem von Ottomotoren, aber auch Einspritzsysteme für die Kraftstoffdosierung in Otto- und Dieselmotoren, werden durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Die Rückstände verschieben das Luft-Kraftstoff-Verhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgas größer werden und der Benzinverbrauch steigt.

Es ist bekannt, daß zur Vermeidung dieser Nachteile Kraftstoffadditive zur Reinhaltung von Ventilen und Vergaser bzw. Einspritzsystemen verwendet werden (M. Rossenbeck in Katalysatoren, Tenside, Mineralöladditive, Hrsg. J. Falbe, U. Hasserodt, S. 223 f., G. Thieme Verlag, Stuttgart, 1978).

Je nach Wirkungsweise, aber auch nach dem bevorzugten Wirkort solcher Detergents-Additive unterscheidet man heute zwei Generationen derartiger Hilfsmittel.

Die erste Additiv-Generation konnte nur die Bildung von Ablagerungen im Ansaugsystem verhindern, nicht aber bereits vorhandene Ablagerungen wieder entfernen, wohingegen die Additive der zweiten Generation beides bewirken können ("keep-clean-" und "clean-up-Effekt") und zwar aufgrund ihrer hervorragenden Thermostabilität, insbesondere auch an Zonen höherer Temperaturen, nämlich an den Einlaßventilen.

Das molekulare Bauprinzip von Kraftstoff-Detergentien kann verallgemeinernd abgegeben werden als Verknüpfung polarer Strukturen mit meist höhermolekularen, unpolaren oder lipophilen Resten.

Vertreter der zweiten Additiv-Generation sind oft Produkte auf der Basis von Polyisobutenen im unpolaren Molekülteil. Hier wieder sind Additive vom Polyisobutenamin-Typ besonders hervorzuheben.

Aus der EP-A 244 616 (1) und der EP-A 476 485 (2) sind Polybutyl- und Polyisobutylamine bzw. Polyisobutylaminoalkohole bekannt, die sich als Kraft- und Schmierstoffadditive eignen. Diese Poly(iso)buten-Derivate sind gesättigt, basieren auf Poly(iso)butenen mit überwiegend endständiger Doppelbindung und werden durch chlorfreie Synthesen hergestellt.

Die oben beschriebenen Poly(iso)butylverbindungen werden durch aufwendige und kostenintensive Oxidationsverfahren, d.h. hier speziell durch Hydroformylierung bzw. Epoxidierung, hergestellt. In einigen Fällen ist auch das Eigenschaftsspektrum dieser Verbindungen hinsichtlich ihrer Wirkung als Kraft- oder Schmierstoffadditive noch nicht optimal.

Aufgabe der vorliegenden Erfindung war es daher, ein mit einfacheren Mitteln durchzuführendes Herstellungsverfahren bereitzustellen, das zu Kraft- oder Schmierstoffadditiven mit verbesserter oder zumindest gleich guter Wirksamkeit im Vergleich zu den aus dem Stand der Technik bekannten Mitteln führt.

Demgemäß wurden Additionsprodukte von Polyolefinen mit überwiegend endständiger Doppelbindung und einem zahlengemittelten Molekulargewicht $\overline{M}_N$ von 250 bis 10.000, welche ein geradkettiges oder $C_1$- bis $C_4$-Alkyl-Seitenketten tragendes aliphatisches Kohlenwasserstoffgerüst aufweisen, mit 1 bis 10 mol pro Äquivalent Doppelbindung eines oder mehrerer Vinylester der allgemeinen Formel I

$$R^1-\overset{\overset{\displaystyle O}{\|}}{C}-O-CH=CH_2 \qquad (I)$$

in der $R^1$ für Wasserstoff oder $C_1$- bis $C_4$-Alkyl steht,
gefunden, welche durch Umsetzung der genannten Polyolefine mit den Vinylestern I in Gegenwart von Radikalstartern bei Temperaturen von 40 bis 220°C erhältlich sind, wobei diese Umsetzungsprodukte anschließend noch zu den entsprechenden Alkoholen hydrolysiert oder zu den entsprechenden Aminen durch reduktive Aminierung mit Aminen der allgemeinen Formel II

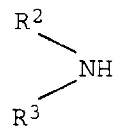 (II)

in der $R^2$ und $R^3$ gleich oder verschieden sein können und Wasserstoff, aliphatische oder aromatische Kohlenwasserstoffreste, primäre oder sekundäre, aromatische oder aliphatische Aminoalkylenreste oder Polyaminoalkylenreste, Polyoxyalkylenreste, Heteroaryl- oder Heterocyclylreste bezeichnen oder gemeinsam mit dem Stickstoffatom, an das sie gebunden sind, einen Ring bilden, in dem noch weitere Heteroatome vorhanden sein können,
umgewandelt worden sein können.

Die genannten Additionsprodukte sind in den meisten Fällen Additionsprodukte von Polyolefinen mit überwiegend endständiger Doppelbindung der allgemeinen Formel III

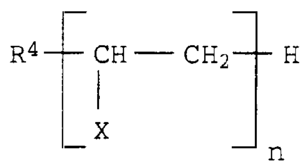 (III)

in der

$R^4$ für einen geradkettigen oder $C_1$- bis $C_4$-Alkyl-seitenketten tragenden aliphatischen Kohlenwasserstoffrest mit einem zahlengemittelten Molekulargewicht $\overline{M}_N$ von 250 bis 10.000 steht,

X eine Gruppierung der Formel -O-CO-$R^1$, eine Hydroxylgruppe oder eine Aminogruppe der Formel -$NR^2R^3$ bezeichnet, wobei $R^1$, $R^2$ und $R^3$ die oben genannten Bedeutungen haben,

und

n eine Zahl von 1 bis 10 bedeutet.

Die eingesetzten Polyolefine sind normalerweise Polymerisate von $C_2$- bis $C_6$-Olefinen mit einem zahlengemittelten Molekulargewicht $\overline{M}_N$ von 250 bis 10.000, vorzugsweise 300 bis 7.500, insbesondere 400 bis 5.000, vor allem 500 bis 2.500.

Als $C_2$- bis $C_6$-Olefin können Ethylen, Propen, 1-Buten, cis- und trans-2-Butene, Isobuten, 1,3-Butadien, 1-Penten, 2-Penten, 2-Methyl-1-buten, 2-Methyl-2-buten, 1,3-Pentadien, 1-Hexen, 2-Hexen, 3-Hexen, 2-Methyl-penten, 2-Methyl-2-penten, 2-Methyl-3-penten, 2-Methyl-4-penten, 3-Methyl-1-penten, 3-Methyl-2-penten, 2-Ethyl-1-buten, 3,3-Dimethyl-1-buten, 1,3-Hexadien, 2,4-Hexadien, 1,5-Hexadien oder 1,3,5-Hexatrien verwendet werden. Es können auch Mischungen der genannten Olefine eingesetzt werden. Bevorzugt werden Ethylen, Propen, 1-Buten, 2-Butene, Isobuten, 1,3-Butadien oder Mischungen hieraus.

Die Polymerisation der genannten $C_2$- bis $C_6$-Olefine zu Homo- oder Copolymerisaten kann in einer oder in mehreren Stufen erfolgen. Insbesondere beim Aufbau des Polymerisates aus Ethylen kann eine zweistufige Arbeitsweise, z.B. mit dem Pentamerisationsprodukt 1-Decen als Zwischenstufe, hinsichtlich Eigenschaften und Molekulargewichtsverteilung von Vorteil sein. Man gelangt so von wachsartigen zu öligen Polymerisationsprodukten.

Die eingesetzten Polyolefine weisen aufgrund von Kettenabbruchreaktionen bei der Polymerisation eine Doppelbindung auf, die überwiegend, d.h. in der Regel zu mindestens 60 %, meist zu mindestens 70 % endständig (α-ständig) ist. Bei der Mehrzahl der eingesetzten Polyolefine liegt der Gehalt an endständigen Doppelbindungen bei 75 % bis 95 %. Der Gehalt an endständigen Doppelbindungen bezieht sich auf die Gesamtanzahl der Doppelbindungen in allen Polymermolekülen. Neben endständigen Doppelbindungen treten in geringen Anteilen noch β-ständige und innerständige Doppelbindungen auf, welche bezüglich der Reaktivität mit den genannten Vinylestern weitaus reaktionsträger sind.

Die beschriebenen Polyolefine mit überwiegend endständiger Doppelbindung sind nach literaturbekannten Methoden herstellbar.

In einer bevorzugten Ausführungsform setzt man als Polyolefine Polyisobutene, die bis zu 30 Gew.-% n-Buten-Einheiten mit eingebaut enthalten können, oder Oligomere des 1-Decens, hergestellt in einer zweistufigen Arbeitsweise

aus Ethylen, mit einem Oligomerisierungsgrad von 3 bis 10, insbesondere 4 bis 8, ein.

Weisen die eingesetzten Polyolefine ein geringfügig verzweigtes, d.h. $C_1$- bis C4-Alkyl-Seitenketten tragendes, aliphatisches Kohlenwasserstoffgerüst auf, treten vorzugsweise Ethyl- oder insbesondere Methyl-Seitenketten auf, so z.B. bei Polyisobuten.

Als geradkettige oder verzweigte Alkylreste für den Rest $R^1$ in den Vinylestern I eignen sich beispielsweise Methyl, Ethyl, n-Propyl, iso-Propyl, n-Butyl, iso-Butyl, sec.-Butyl und tert.-Butyl. Bevorzugt werden insbesondere Methyl und Ethyl.

Als Vinylester I eignen sich insbesondere Vinylbutyrat, Vinylpropionat und insbesondere Vinylacetat und Vinylformiat. Vinylformiat ($R^1$=H) ist auch deshalb vorteilhaft, weil bei einer sich anschließenden Hydrolyse das Formiat sehr leicht verseift werden kann und bei einer sich anschließenden reduktiven Aminierung ebenfalls sehr leicht zerfällt, da die Zersetzungsprodukte CO oder $CO_2$ beidesmal gasförmig entweichen.

Die Vinylester I können auch in oligomerer Form, insbesondere als Di- bis Decamere, vor allem als Di- bis Hexamere, eingesetzt werden.

Das stöchiometrische Verhältnis von umgesetzten Vinylestern I zu Polyolefinen, was der Anzahl der Vinyleinheiten n in den Additionsprodukten III entspricht, liegt bei 1:1 bis 10:1, vorzugsweisen 1:1 bis 6:1. Dabei kann n durch die Konzentration der Vinylester I bei der Umsetzung gesteuert werden. Der Einsatz oligomerer Vinylester bestimmt durch seinen Oligomerisationsgrad das Endprodukt hinsichtlich der Variablen n.

Die Umsetzung mit den Vinylestern oder ihren Oligomeren ist eine radikalische Addition und erfolgt bei Temperaturen von 40 bis 220°C, vorzugsweise 80 bis 200°C, insbesondere 120 bis 180°C, und bei Drucken von normalerweise 1 bis 10 bar, je nach Viskosität der eingesetzten Verbindungen, durch Zusatz von Radikalbildnern und gegebenenfalls in Lösung.

Als Lösungsmittel hierbei sind insbesondere aliphatische Kohlenwasserstoffe (z.B. Butan, Pentan, Hexan) oder auch Cycloaliphaten (z.B. Cyclopentan, Cyclohexan, Cycloheptan) oder Chlorkohlenwasserstoffe wie Methylenchlorid, Tetrachlorkohlenstoff, Chloroform sowie Di- und Trichlorethan geeignet. Besonderes Interesse findet auch die Verwendung von flüssigem Schwefeldioxid oder oligomeren Vinylestern, insbesondere oligomeren Vinylestern I, als Lösungsmittel. Höhere Lösungsmittelgehalte erhöhen im allgemeinen die Polymerumsätze und reduzieren den Oligomerisierungsgrad der Vinylester.

Als Radikalstarter sind nahezu alle bekannten Starter mit ihrem zugehörigen Temperaturniveau einsetzbar, sofern ausreichende Löslichkeit vorliegt. Geeignete derartige Radikalinitiatoren sind beispielsweise Peroxidverbindungen wie tert.-Butylperpivalat, tert.-Butylperneodecanonat, tert.-Butylperethylhexanoat, tert.-Butylperisobutyrat, Di-tert.-butylperoxid, Di-tert.-amylperoxid, Diacetylperoxidicarbonat, tert.-Butylhydroperoxid oder Dicyclohexylperoxidicarbonat oder Azoverbindungen wie 2,2'-Azobis(isobutyronitril). Die Radikalstarter können allein oder in Mischung untereinander angewendet werden. Auch Redox-Co-Initiatoren können mitverwendet werden. Sie werden bei der Substanzpolymerisation vorzugsweise separat oder in Form einer Lösung in den Polymerisationsreaktor eingebracht.

Die Radikalstarterkonzentration liegt im allgemeinen nicht über 5 Gew.-%, vorzugsweise bei 0,1 bis 3 Gew.-%, bezogen auf eingesetzten Vinylester I.

Als technische Ausführungsform ist ein diskontinuierliches Verfahren mit Vinylester- und Katalysatorzulauf bevorzugt, wenn hohe Ausbeuten und niedrige Funktionalisierung hinsichtlich der Variablen n erwünscht sind. Höhere Funktionalisierung hinsichtlich n erhält man vor allem durch Anheben der Vinylester-Konzentration. Prinzipiell kann man auch mit kontinuierlichen Verfahren arbeiten.

Die Radikalstarterreste und deren Zersetzungsprodukte können meist im Umsetzungsprodukt verbleiben, sofern sie für die Weiterverarbeitung oder die Anwendung nicht störend sind.

Zur Entfernung der Nebenprodukte, die beispielsweise durch Oligomerisation der Vinylester I entstehen, ist insbesondere eine destillative Abtrennung zusammen mit dem Lösungsmittel oder ein Extraktionsverfahren anwendbar.

Die erhaltenen Additionsprodukte von Polyolefinen mit Vinylestern I können gegebenenfalls zu den entsprechenden Alkoholen nach üblichen Methoden hydrolysiert, d.h. verseift werden, wobei diese Hydrolyse sauberer abläuft, wenn die genannten Additionsprodukte wie oben beschrieben vorher gereinigt worden sind. Übliche hier anwendbare Hydrolysemethoden sind vor allem das Erhitzen in einem entsprechenden Lösungsmittel unter Verwendung saurer oder basischer Katalysatoren. Als Lösungsmittel eignen sich beispielsweise Alkohole wie Methanol, Ethanol, Isopropanol oder Isobutanol, Ether wie Tetrahydrofuran oder Dioxan oder Amide wie N,N-Dimethylformamid oder N-Methylpyrrolidon sowie Gemische dieser Lösungsmittel untereinander und mit Wasser. Prinzipiell können alle Lösungsmittel verwendet werden, die sowohl die genannten Additionsprodukte als auch die eingesetzten Katalysatoren ausreichend lösen und die nicht mit den gelösten Substanzen, insbesondere den Katalysatoren, reagieren. Als saure Katalysatoren können beispielsweise Mineralsäuren wie Schwefelsäure oder Salzsäure, organische Sulfonsäuren wie p-Toluolsulfonsäure oder Methansulfonsäure oder saure Ionenaustauscherharze eingesetzt werden. Als basische Katalysatoren kommen beispielsweise Alkalimetallhydroxide wie Natrium- oder Kaliumhydroxid oder Amine wie Diethylamin, Triethylamin, Morpholin, Pyridin oder Piperidin in Betracht.

Die so durch Hydrolyse erhaltenen Alkohole können gegebenenfalls noch weiter zu den entsprechenden Aminen

durch reduktive Aminierung mit den Aminen II umgewandelt werden. Man kann aber auch direkt die beschriebenen Additionsprodukte von Polyolefinen mit Vinylestern I der reduktiven Aminierung unterwerfen, um zu den genannten Aminen zu gelangen.

Die reduktive Aminierung erfolgt nach bekannten Verfahren beim Temperaturen von normalerweise 150 bis 250°C und Drucken von üblicherweise 50 bis 300 bar Wasserstoff über nickelhaltigen Kontakten gegebenenfalls in aromatischen, aliphatischen oder cycloaliphatischen Lösungsmitteln. Der Überschuß an Amin II kann dabei bis zu 50 mol betragen.

Man setzt bei der reduktiven Aminierung Amine der allgemeinen Formel II ein

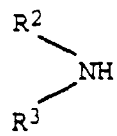
(II)

in der
$R^2$ und $R^3$, die gleich oder verschieden sind, vorzugsweise Wasserstoff, $C_1$- bis $C_{10}$-Alkyl, Phenyl, Naphthyl, $C_1$- bis $C_{10}$-Hydroxyalkyl, einen Aminoalkylenrest der allgemeinen Formel IV

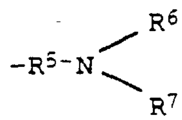
(IV)

worin

$R^5$ für einen $C_2$- bis $C_{10}$-Alkylenrest steht und
$R^6$ und $R^7$, die gleich oder verschieden sind, für Wasserstoff, $C_1$- bis $C_{10}$-Alkyl, Phenyl, Naphthyl, $C_1$- bis $C_{10}$-Hydroxyalkyl oder einen Polybuten- oder Polyisobutenrest mit jeweils 20 bis 400 Kohlenstoffatomen stehen, einen Polyaminoalkylenrest der allgemeinen Formel V

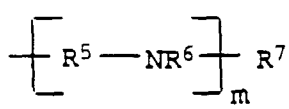
(V)

worin

die Reste $R^5$ jeweils gleich oder verschieden sind,
die Reste $R^6$ jeweils gleich oder verschieden sind,
die Reste $R^5$, $R^6$ und $R^7$ die vorstehenden Bedeutungen besitzen und
m eine ganze Zahl von 2 bis 8 darstellt, oder einen Polyoxyalkylenrest der allgemeinen Formel VI

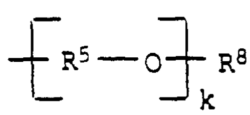
(VI)

worin
die Reste $R^5$ jeweils gleich oder verschieden sind und die vorstehende Bedeutung besitzen, $R^8$ für Wasserstoff oder $C_1$- bis $C_{10}$-Alkyl steht und k eine ganze Zahl von 1 bis 30 darstellt,

bedeuten oder worin $R^2$ und $R^3$ zusammen mit dem Stickstoffatom, an das sie gebunden sind, einen Morpholinylrest darstellen.

Beispiele für einzelne Bedeutungen der Reste $R^2$ und R3 sind:

Wasserstoff, Methyl, Ethyl, n-Propyl, iso-Propyl, n-Butyl, sec.-Butyl, iso-Butyl, tert.-Butyl, Pentyl, Hexyl, Phenyl,

$-CH_2-CH_2-NH_2$, 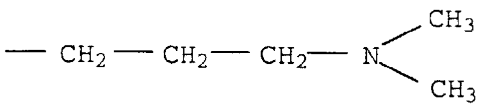 ,

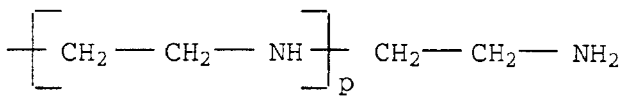 ,

worin p eine ganze Zahl von 1 bis 7, insbesondere 1 bis 3, steht, $-CH_2CH_2-OH$ und

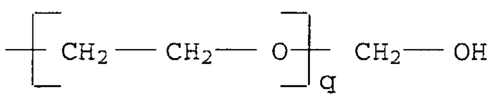 ,

worin q für eine ganze Zahl von 1 bis 30 steht.

Die erfindungsgemäßen Additionsprodukte der allgemeinen Formel III werden zweckmäßigerweise durch die beschriebene Umsetzung der Polyolefine mit überwiegend endständiger Doppelbindung und einem zahlengemittelten Molekulargewicht von 250 bis 10.000, welche ein geradkettiges oder $C_1$- bis $C_4$-Alkyl-Seitenketten tragendes aliphatisches Kohlenwasserstoffgerüst aufweisen, mit 1 bis 10 mol pro Äquivalent Doppelbindung eines oder mehrerer Vinylester I in Gegenwart von Radikalstartern bei Temperaturen von 40 bis 220°C hergestellt, wobe die hierbei erhaltenen Carbonsäureester-Gruppierungen aufweisenden Verbindungen anschließend noch, wie beschrieben, zu den entsprechenden Alkoholen hydrolysiert oder zu den entsprechenden Aminen durch reduktive Aminierung mit den Aminen II umgewandelt werden können. Prinzipiell können die Umsetzungsprodukte III jedoch auch nach anderen Verfahren hergestellt werden.

Die erfindungsgemäßen Additionsprodukte von Polyolefinen mit Vinylestern I bzw. die Additionsprodukte III werden aufgrund ihrer Eigenschaften als Detergentien und Dispergatoren in Kraftstoffen, insbesondere in Kraftstoffen von Ottomotoren, eingesetzt. Sie können jedoch auch in Schmierstoffen als Additive Verwendung finden.

Werden die erfindungsgemäßen Additionsprodukte von Polyolefinen mit Vinylestern I bzw. die Additionsprodukte III in Kraftstoffen eingesetzt, so gibt man sie bevorzugt in einer Menge von 10 bis 5000 ppm, insbesondere 50 bis 1000 ppm zu. In Schmierstoffen muß in der Regel höher additiviert werden, die Mengen können hier 0,1 bis 6 Gew.-%, insbesondere 0,5 bis 5 Gew.-%, betragen.

Sollen in erster Linie die dispergierenden Eigenschaften der erfindungsgemäßen Stoffe genutzt werden, so kann an sie auch mit herkömmlichen Detergentien als zusätzlichen Additiven kombinieren.

Als Detergents-Komponente in der Mischung mit den erfindungs-gemäßen Stoffen als Dispergatoren kann prinzipiell jedes bekannte der hierfür geeigneten Produkte eingesetzt werden, wie sie z.B. bei J. Falbe, U. Hasserodt, Katalysatoren, Tenside und Mineralöladditive, G. Thieme Verlag Stuttgart, 1978, S. 223 f., oder bei K. Owen, Gasoline and Diesel Fuel Additives, John Wiley & Sons, 1989, S. 23 ff., beschrieben sind.

Vorzugsweise verwendet man N-haltige Detergentien, z.B. Verbindungen, die eine Amin- oder Amid-Gruppe enthalten. Insbesondere geeignet sind Polyisobutenamine gemäß (1), Ethylendiamintetraessigsäureamide und/oder -imide gemäß EP-A 356 725, wobei auf die Definitionen in diesen Literaturstellen Bezug genommen wird. Die dort beschriebenen Produkte verfügen herstellungsbedingt ebenfalls - wie die erfindungsgemäßen Umsetzungsprodukte - über den Vorteil, chlor- bzw. chloridfrei zu sein.

Soll in erster Linie die Detergents-Wirkung der erfindungsgemäßen Additionsprodukte genutzt werden, so können diese Stoffe auch mit Trägerölen kombiniert werden. Derartige Trägeröle sind bekannt, insbesondere eignen sich Trägeröle auf Polyglykolbasis, z.B. entsprechende Ether und/oder Ester, wie sie in der US-A 5 004 478 oder der DE-A 38 38 918 beschrieben sind. Auch Polyoxyalkylenmonoole mit Kohlenwasserstoffendgruppen (US-A 4 877 416) oder Trägeröle, wie sie in der DE-A 41 42 241 offenbart sind, können eingesetzt werden.

Erfindungsgemäße Additionsprodukte von Polyolefinen mit Vinylestern I bzw. Additionsprodukte III, bei denen

jeweils die Carbonsäureester-Funktion im Produkt noch vorhanden ist, können selbst als Trägeröl-Komponente in Kraft- und Schmierstoffzusammensetzungen eingesetzt werden. Ihre Menge beträgt hierbei 0,1 bis 30 Gew.-%, vorzugsweise 1 bis 20 Gew.-%, insbesondere 3 bis 10 Gew.-%, bezogen auf die Gesamtmenge der Kraft- oder Schmierstoffzusammensetzung.

Als Kraftstoffe für Ottomotoren kommen verbleites und insbesondere unverbleites Normal- und Superbenzin in Betracht. Die Benzine können auch andere Komponenten als Kohlenwasserstoffe, z.B. Alkohole wie Methanol, Ethanol oder tert.-Butanol sowie Ether, z.B. Methyl-tert.-butylether, enthalten. Neben den erfindungsgemäßen Additionsprodukten enthalten die Kraftstoffe in der Regel noch weitere Zusätze wie Korrosionsinhibitoren, Stabilisatoren, Antioxidantien und/oder weitere Detergentien.

Korrosionsinhibitoren sind meist Ammoniumsalze organischer Carbonsäuren, die durch entsprechende Struktur der Ausgangsverbindungen zur Filmbildung neigen. Auch Amine zur Absenkung des pH-Wertes finden sich häufig in Korrosionsinhibitoren. Als Buntmetallkorrosionsschutz werden meist heterocyclische Aromaten eingesetzt.

Die erifndungsgemäßen Additionsprodukte lassen sich durch das einfach und kostengünstig durchzuführende Verfahren der radikalischen Addition von Vinylestern an Polyolefine in vorteilhafter Weise herstellen. Die erhaltenen Produkte lassen sich mit gleich guter oder sogar verbesserter Wirksamkeit im Vergleich zu herkömmlichen Mitteln als Additive in Kraft- und Schmierstoffzusammensetzungen verwenden.

Herstellungsbeispiele

Beispiel 1

In einem 1,2 l Edelstahlautoklav mit Rührer wurden 200 g Polyisobuten mit 91 % endständigen Doppelbindungen, einem zahlengemittelten Molekulargewicht $\overline{M}_N$ von 1021 und einer Verteilung D (Dispersizität) von 1,6 (ermittelt mit Polyisobuten-Eichproben auf einer Säulenkombination von je 30 cm Ultrastyragel $10^3$ und $10^5$ Å mit Korngröße 7 μ) in 200 g Hexan gelöst, mit 34 g Vinylacetat und 1,5 g Di-tert.-butylperoxid versetzt und unter Rühren auf 180°C erwärmt. Nach einer Stunde wurde abgekühlt, der Acetatumsatz gaschromatographisch zu 51 % bestimmt, Hexan, Vinylacetat und Vinylacetatoligomere bis 230°C (1 mbar) abgezogen und der Rückstand analysiert.

Das Produkt hatte eine Verseifungszahl von 20,4 und einen Polyisobuten-Umsatz von 40 %, der mittels HPLC bestimmt wurde. Die Kenndaten zeigten, daß 1,0 mol Vinylacetat pro Mol umgesetztes Polyisobuten eingebaut wurde. Die Doppelbindungsanalyse mittels $^{13}$C-HMR zeigte, daß die Addition nahezu ausschließlich an der endständigen Doppelbindung erfolgte.

Beispiel 2

Der Versuch wurde in Analogie zu Beispiel 1 durchgeführt, die Menge an Vinylacetat jedoch auf 161 g und die des Radikalstarters auf 4,35 g erhöht. Man erhielt einen Esterumsatz von 64,5 %, einen Polyisobuten-Umsatz von 44 % und eine Verseifungszahl des Rückstandes von 128. Damit ergaben sich durchschnittlich 5,7 Acetateinheiten pro Mol umgesetztem Polyisobuten.

Beispiel 3

Der Versuch wurde in Analogie zu Beispiel 1 durchgeführt, jedoch mit 28,5 g Vinylformiat und bei einer Reaktionstemperatur von 160°C. Man erhielt einen Formiatumsatz von 49 %, einen Polyisobuten-Umsatz von 38 % und eine Verseifungszahl von 30,1, die ca. 1,5 Formiateinheiten pro Mol umgesetztem Polyisobuten entsprach.

Beispiele 4 bis 6

Je 100 g der Destillationsrückstände aus den Beispielen 1 bis 3 wurden in aliquoten Mengen 0,01 molarer Lösung von Triethylamin in Isobutanol eine Stunde unter Rückfluß erhitzt, dann mit 30 g Ethanol versetzt und nach einer weiteren Stunde destillativ von Amin, Alkoholen und Acetaten befreit. Bei 230°C (1 mbar) erhielt man als Rückstände Hydrolyseprodukte, deren OH-Zahlen etwas über den Verseifungszahlen der Ausgangsprodukte lagen. Aus Beispiel 1 erhielt man ein Polymer mit der OH-Zahl 21,5, aus Beispiel 2 ein Polymer mit der OH-Zahl 149 und bei Beispiel 3 ein Polymer mit der OH-Zahl 31,0.

Beispiele 7 und 8

Die Polymere aus den Beispielen 3 und 5 wurden reduktiv mit Ammoniak aminiert. Dazu wurden 80 g der Polymeren in 200 ml Ammoniak mit 60 g Ethanol und 20 g Raney-Kobalt in einem 1 1 Rollautoklaven mit 200 bar Wasserstoff

bei 180°C 5 Stunden lang behandelt. Nach dem Abkühlen trennte man den Katalysator durch Filtrieren ab, verdampfte den überschüssigen Ammoniak und trennte das Lösungsmittel destillativ ab. Die Aminzahlen lagen bei 29,8 (Beispiel 3) und 150 (Beispiel 5).

Anwendungstechnische Prüfungen

Anwendungstechnisch geprüft wurde Beispiel 1 als Trägeröl-Komponente für Polybutenamin gemäß (1) für Kraftstoffe, Beispiel 7 als Kraft- und Schmierstoffadditiv und Beispiel 8 als Kraftstoffadditiv. Die ventilreinigende Wirkung der additivierten Kraftstoffe wurde über Ventilablagerungen im Opel-Kadett 1,2 l-Motor nach genormter Prüfung gemäß CEC-Methode F-02-C79 nach 40 Stunden beurteilt.

Die dispergierende Wirkung für Schmieröle wurde mittels der Tüpfelmethode bestimmt, die von A. Schilling in "Les Huiles Pour Meteurs et la Graissage des Moteurs", Band 1, 1962, Seiten 89-90, beschrieben ist. Diese Dispersantwirkung wurde bei 20°C und bei 250°C geprüft.

Als Prüfkraftstoff wurde unadditivierter Superkraftstoff einer deutschen Raffinerie verwendet, ein Blend aus Crackbenzin, Pyrolysebenzin, iso-Pentan, Butan, Alkylat und Reformat (Platformat).

Den in der nachstehenden Tabelle zusammengestellten Daten läßt sich entnehmen, daß die erfindungsgemäße Kraft- oder Schmierstoffzusammensetzung dem Stand der Technik hinsichtlich ventilreinigender Wirkung bzw. dispergierender Wirkung überlegen ist.

| Beispiel Nr. | Polymer aus Beispiel Nr. | Additivierung | Einlaßventilablagerung [mg/Ventil] | Dispersantbeurteilung bei 20°C/250°C (gut=600-800) |
|---|---|---|---|---|
| 9 | 1 | 300 ppm +300 ppm Polybutenamin | 0 | - |
| 10 | 8 | 300 ppm | 18 | - |
| 11 | 7 | 300 ppm | 17 | - |
| 12 | 7 | 3 Gew.-% | - | 810/750 |
| Vergleich A | - | - | 422 | - |
| Vergleich B | - | 300 ppm Polybutenamin | 21 | - |
| Vergleich C | - | 3 Gew.-% | - | 580/540 |

Hierbei zeigt Prüflauf A den Grundwert des unadditivierten Kraftstoffes. Prüflauf B zeigt den Stand der Technik mit einem Polybutenamin gemäß (1), Beispiel 1. Vergleichsbeispiel C zeigt die Prüfung eines üblichen Polyisobutenylsuccinimids mittels der oben genannten Tüpfelmethode.

## Patentansprüche

1. Additionsprodukte von Polyolefinen mit überwiegend endständiger Doppelbindung und einem zahlengemittelten Molekulargewicht von 250 bis 10.000, welche ein geradkettiges oder $C_1$- bis $C_4$-Alkyl-Seitenketten tragendes aliphatisches Kohlenwasserstoffgerüst aufweisen, mit 1 bis 10 mol pro Äquivalent Doppelbindung eines oder mehrerer Vinylester der allgemeinen Formel I

$$R^1-\overset{\overset{\displaystyle O}{\|}}{C}-O-CH=CH_2 \qquad (I)$$

in der $R^1$ für Wasserstoff oder $C_1$- bis $C_4$-Alkyl steht,
erhältlich durch Umsetzung der genannten Polyolefine mit den Vinylestern I in Gegenwart von Radikalstartern bei Temperaturen von 40 bis 220°C, wobei diese Umsetzungsprodukte anschließend noch zu den entsprechenden Alkoholen hydrolysiert oder zu den entsprechenden Aminen durch reduktive Aminierung mit Aminen der allgemei-

nen Formel II

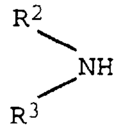

(II)

in der $R^2$ und $R^3$ gleich oder verschieden sein können und Wasserstoff, aliphatische oder aromatische Kohlenwasserstoffreste, primäre oder sekundäre, aromatische oder aliphatische Aminoalkylenreste oder Polyaminoalkylenreste, Polyoxyalkylenreste, Heteroaryl- oder Heterocyclylreste bezeichnen oder gemeinsam mit dem Stickstoffatom, an das sie gebunden sind, einen Ring bilden, in dem noch weitere Heteroatome vorhanden sein können, umgewandelt worden sein können.

**2.** Additionsprodukte der allgemeinen Formel III

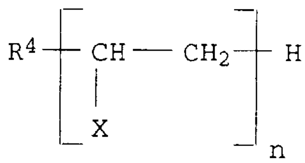

(III)

erhältlich gemäß dem in Anspruch 1 beschriebenen Verfahren, wobei in der allgemeinen Formel III

$R^4$ für einen geradkettigen oder $C_1$- bis $C_4$-Alkyl-Seitenketten tragenden aliphatischen Kohlenwasserstoffrest mit einem zahlengemittelten Molekulargewicht von 250 bis 10.000 steht,

X eine Gruppierung der Formel -O-CO-$R^1$, eine Hydroxylgruppe oder eine Aminogruppe der Formel -$NR^2R^3$ bezeichnet, wobei $R^1$, $R^2$ und $R^3$ die in Anspruch 1 genannten Bedeutungen haben,

und

n eine Zahl von 1 bis 10 bedeutet.

**3.** Verfahren zur Herstellung von Additionsprodukten III gemäß Anspruch 2, dadurch gekennzeichnet, daß man Polyolefine mit überwiegend endständiger Doppelbindung und einem zahlengemittelten Molekulargewicht von 250 bis 10.000, welche ein geradkettiges oder $C_1$- bis $C_4$-Alkyl-Seitenketten tragendes aliphatisches Kohlenwasserstoffgerüst aufweisen, mit 1 bis 10 mol pro Äquivalent Doppelbindung eines oder mehrerer Vinylester der allgemeinen Formel I

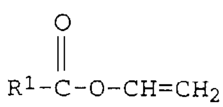

(I)

in der $R^1$ für Wasserstoff oder $C_1$- bis $C_4$-Alkyl steht,
in Gegenwart von Radikalstartern bei Temperaturen von 40 bis 220°C umsetzt, wobei diese Umsetzungsprodukte anschließend noch zu den entsprechenden Alkoholen hydrolysiert oder zu den entsprechenden Aminen durch reduktive Aminierung mit Aminen der allgemeinen Formel II

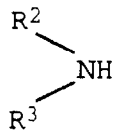
(II)

in der $R^2$ und $R^3$ gleich oder verschieden sein können und Wasserstoff, aliphatische oder aromatische Kohlenwasserstoffreste, primäre oder sekundäre, aromatische oder aliphatische Aminoalkylenreste oder Polyaminoalkylenreste, Poly-oxyalkylenreste, Heteroaryl- oder Heterocyclylreste bezeichnen oder gemeinsam mit dem Stickstoffatom, an das sie gebunden sind, einen Ring bilden, in dem noch weitere Heteroatome vorhanden sein können, umgewandelt werden können.

**4.** Kraft- oder Schmierstoffzusammensetzungen, enthaltend ein oder mehrere Additionsprodukte von Polyolefinen mit Vinylestern I gemäß Anspruch 1 oder ein oder mehrere Additionsprodukte III gemäß Anspruch 2 als Additive oder Trägeröl-Komponenten in wirksamen Mengen.

**5.** Kraftstoffzusammensetzungen nach Anspruch 4, enthaltend ein oder mehrere Additionsprodukte von Polyolefinen mit Vinylestern I gemäß Anspruch 1 oder ein oder mehrere Additionsprodukte III gemäß Anspruch 2 als Additive in einer Menge von 10 bis 5.000 ppm.

**6.** Schmierstoffzusammensetzungen nach Anspruch 4, enthaltend ein oder mehrere Additionsprodukte von Polyolefinen mit Vinylestern I gemäß Anspruch 1 oder ein oder mehrere Additionsprodukte III gemäß Anspruch 2 als Additive in einer Menge von 0,1 bis 6 Gew.-%.

**7.** Schmierstoffzusammensetzungen nach Anspruch 4, enthaltend ein oder mehrere Additionsprodukte von Polyolefinen mit Vinylestern I gemäß Anspruch 1 oder ein oder mehrere Additionsprodukte III gemäß Anspruch 2, bei denen jeweils die Carbonsäureester-Funktion im Produkt noch vorhanden ist, als Trägeröl-Komponente in einer Mengen von 0,1 bis 30 Gew.-%.

## Claims

**1.** An adduct of a polyolefin having predominantly a terminal double bond and a number average molecular weight of from 250 to 10,000, which possesses an aliphatic hydrocarbon skeleton which is straight-chain or carries $C_1$-$C_4$-alkyl side chains, with from 1 to 10 mol, per equivalent of double bond, of one or more vinyl esters of the formula I

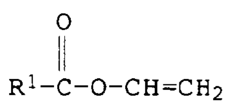
(I)

where $R^1$ is hydrogen or $C_1$-$C_4$-alkyl,
obtainable by reacting the stated polyolefin with the vinyl esters I in the presence of a free radical initiator at from 40 to 220°C, it being possible for this reaction product subsequently to have been hydrolyzed to the corresponding alcohol or converted into the corresponding amine by reductive amination with an amine of the formula II

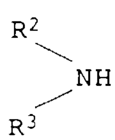
(II)

where $R^2$ and $R^3$ may be identical or different and are each hydrogen, an aliphatic or aromatic hydrocarbon radical, a primary or secondary, aromatic or aliphatic aminoalkylene radical or a polyaminoalkylene radical, a polyoxyalkylene radical or a hetaryl or heterocyclyl radical, or, together with the nitrogen atom to which they are bonded,

form a ring in which further hetero atoms may be present.

**2.** An adduct of the formula III

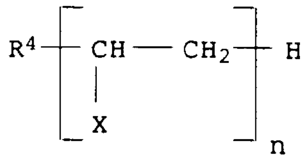

(III)

obtainable by the process described in claim 1, in which formula III

$R^4$ is an aliphatic hydrocarbon radical which is straight-chain or carries $C_1$-$C_4$-alkyl side chains and has a number average molecular weight of from 250 to 10,000,

X is a group of the formula -O-CO-$R^1$, hydroxyl or amino of the formula -$NR^2R^3$, where $R^1$, $R^2$ and $R^3$ have the meanings stated in claim 1,

and

n is from 1 to 10.

**3.** A process for the preparation of an adduct III as claimed in claim 2, wherein a polyolefin having predominantly a terminal double bond and a number average molecular weight of from 250 to 10,000, which possesses an aliphatic hydrocarbon skeleton which is straight-chain or carries $C_1$-$C_4$-alkyl side chains, is reacted with from 1 to 10 mol, per equivalent of double bond, of one or more vinyl esters of the formula I

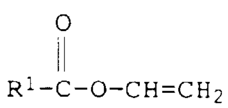

(I)

where $R^1$ is hydrogen or $C_1$-$C_4$-alkyl,
in the presence of a free radical initiator at from 40 to 220°C, it being possible for this reaction product subsequently to have been hydrolyzed to the corresponding alcohol or converted into the corresponding amine by reductive amination with an amine of the formula II

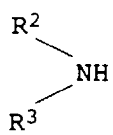

(II)

where $R^2$ and $R^3$ may be identical or different and are each hydrogen, an aliphatic or aromatic hydrocarbon radical, a primary or secondary, aromatic or aliphatic aminoalkylene radical or polyaminoalkylene radical, a polyoxyalkylene radical or a hetaryl or heterocyclyl radical, or, together with the nitrogen atom to which they are bonded, form a ring in which further hetero atoms may be present.

**4.** A fuel or lubricant composition containing one or more adducts of polyolefins with vinyl esters I as claimed in claim 1 or one or more adducts III as claimed in claim 2 as additives or carrier oil components in effective amounts.

**5.** A fuel composition as claimed in claim 4, containing one or more adducts of polyolefins with vinyl esters I as claimed in claim 1 or one or more adducts III as claimed in claim 2 as additives in an amount of from 10 to 5,000 ppm.

**6.** A lubricant composition as claimed in claim 4, containing one j or more adducts of polyolefins with vinyl esters I

as claimed in claim 1 or one or more adducts III as claimed in claim 2 as additives in an amount of from 0.1 to 6% by weight.

**7.** A lubricant composition as claimed in claim 4, containing one or more adducts of polyolefins with vinyl esters I as claimed in claim 1 or one or more adducts III as claimed in claim 2, in each of which the carboxylic ester function is still present in the product, as carrier oil components in an amount of from 0.1 to 30% by weight.

## Revendications

**1.** Produits d'addition de polyoléfines à double liaison principalement terminale et d'un poids moléculaire moyen en nombre de 250 à 10.000, qui présentent une ossature d'hydrocarbure aliphatique linéaire ou portant des chaînes latérales du type alkyle en $C_1$ à $C_4$, avec 1 à 10 moles par équivalent de double liaison d'un ou plusieurs esters vinyliques de la formule générale I

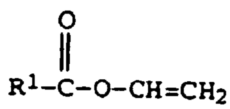

(I)

dans laquelle $R^1$ représente un atome d'hydrogène ou un radical alkyle en $C_1$ à $C_4$,
que l'on peut obtenir par la réaction des polyoléfines susmentionnées avec les esters vinyliques 1, en présence d'amorceurs radicalaires et à des températures de 40 à 220°C, où ces produits de réaction peuvent ensuite encore avoir été hydrolysés en les alcools correspondants, ou avoir été convertis en les amines correspondantes par amination réductrice avec des amines de la formule générale II

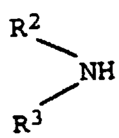

(II)

dans laquelle $R^2$ et $R^3$ peuvent être identiques ou différents et représentent des atomes d'hydrogène, des restes d'hydrocarbures aliphatiques ou aromatiques, des restes aminoalkylène aromatiques ou aliphatiques, primaires ou secondaires, ou des restes polyaminoalkylène, des restes polyoxyalkylène, des restes hétéroaryle ou hétérocyclyle, ou bien forment ensemble un noyau ou cycle avec l'atome d'azote auquel ils sont liés, lequel noyau ou cycle peut encore contenir d'autres hétéroatomes.

**2.** Produits d'addition de la formule générale III

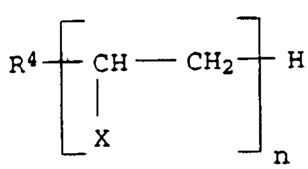

(III)

que l'on peut obtenir suivant le procédé décrit dans la revendication 1, où dans la formule générale III

$R^4$ représente un reste d'hydrocarbure aliphatique linéaire ou portant des chaînes latérales du type alkyle en $C_1$ à $C_4$, possédant un poids moléculaire moyen en nombre de 250 à 10.000,

X représente un groupement de la formule $-O-CO-R^1$, un radical hydroxyle, ou un radical amino de la formule $-NR^2R^3$, où $R^1$, $R^2$ et $R^3$ possèdent les mêmes significations que celles qui leur ont été attribuées dans la revendication 1,

et

n représente un nombre dont la valeur varie de 1 à 10.

**3.** Procédé de préparation de produits d'addition III suivant la revendication 2, caractérisé en ce que l'on fait réagir des polyoléfines à double liaison principalement terminale et d'un poids moléculaire moyen en nombre de 250 à 10.000, qui présentent une ossature d'hydrocarbure aliphatique à chaîne droite ou portant des chaînes latérales du type alkyle en $C_1$ à $C_4$, avec de 1 à 10 moles par équivalent de double liaison, d'un ou plusieurs esters vinyliques de la formule générale I

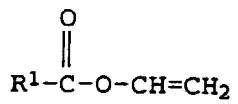

(I)

dans laquelle $R^1$ représente un atome d'hydrogène ou un radical alkyle en $C_1$ à $C_4$,
en présence d'amorceurs radicalaires et à des températures de 40 à 220°C, où on peut ensuite encore hydrolyser ces produits de réaction en les alcools correspondants ou bien on peut les convertir en les amines correspondantes par amination réductrice avec des amines de la formule générale II

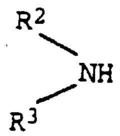

(II)

dans laquelle $R^2$ et $R^3$ peuvent être identiques ou différents et représentent des atomes d'hydrogène, des restes d'hydrocarbures aliphatiques ou aromatiques, des restes aminoalkylène aromatiques ou aliphatiques, primaires ou secondaires, ou des restes polyaminoalkylène, des restes polyoxyalkylène, des restes hétéroaryle ou hétérocyclyle, ou bien forment un noyau ou cycle ensemble avec l'atome d'azote auquel ils sont attachés, lequel noyau ou cycle peut encore comporter d'autres hétéroatomes.

**4.** Compositions de carburants ou de lubrifiants, qui contiennent un ou plusieurs produits d'addition de polyoléfines et d'esters vinyliques I suivant la revendication 1 ou un ou plusieurs produits d'addition III suivant la revendication 2, à titre d'additifs ou des composants d'huiles de support ou servant de véhicules, en proportions actives.

**5.** Compositions de carburants suivant la revendication 4, contenant un ou plusieurs produits d'addition de polyoléfines et d'esters vinyliques I suivant la revendication 1, ou un ou plusieurs produits d'addition III suivant la revendication 2, à titre d'additifs, en une proportion de 10 à 5.000 ppm.

**6.** Compositions lubrifiantes suivant la revendication 4, contenant un ou plusieurs produits d'addition de polyoléfines et d'esters vinyliques I suivant la revendication 1, ou un ou plusieurs produits d'addition IIII suivant la revendication 2, à titre d'additifs, en une quantité de 0,1 à 6% en poids.

**7.** Compositions lubrifiantes suivant la revendication 4, contenant un ou plusieurs produits d'addition de polyoléfines et d'esters vinyliques I suivant la revendication 1, ou un ou plusieurs produits d'addition IIII suivant la revendication 2, où à chaque fois la fonction ester d'acide carboxylique est encore présente dans le produit, à titre de composant d'huile de support ou servant de véhicule, en proportions de 0,1 à 30% en poids.